# EUROPEAN PATENT APPLICATION

(11) **EP 4 753 185 A1**
(43) Date of publication of application: **03.06.2026**
(21) Application number: 24215768.3
(22) Date of filing: 27.11.2024
(51) Int. Cl.: H04L 1/08, H04L 1/1829, H04R 1/10, H04W 4/30, H04W 4/80

(54) **BLUETOOTH LOW-ENERGY AUDIO BROADCAST METHOD AND APPARATUS**

(71) Applicant: NXP B.V., 5656 AG Eindhoven (NL)
(72) Inventor: Verschueren, Pieter, 5656AG Eindhoven (NL); Geeraerts, Sammy, 5656AG Eindhoven (NL)
(74) Representative: Miles, John Richard

(57) **Abstract**

A method of receiving a Bluetooth Low Energy (BLE) audio broadcast and a Bluetooth Low Energy audio broadcast receiver is described. A BLE broadcast audio receiver receives a broadcast isochronous stream (BIS) intended for playback by the receiver. The BLE broadcast audio receiver receives a further BIS intended for playback by a different BLE broadcast audio receiver. The further BIS is re-transmitted by the BLE broadcast receiver.

## Description

### FIELD

This disclosure relates to a method of receiving a Bluetooth Low Energy audio broadcast and a Bluetooth LE audio broadcast receiver.

### BACKGROUND

The Bluetooth standard version 5.2 and later, also referred to as Bluetooth low energy or BLE, supports the LE Audio standard which allows the broadcasting of audio signals also known as Aurocast^{™}. In a broadcast configuration which may be referred to as a Bluetooth LE audio broadcast, the LE audio transmitter which is an Isochronous Broadcaster device type can broadcast a number of associated broadcast isochronous (audio) streams (BISs) which are referred to as a broadcast isochronous group (BIG). A BIS is a one-to-many transport stream which may be divided into one or more subevents that are timing slots for broadcasting specific Broadcast Isochronous Packet data units (PDUs). An LE audio transmitter may transmit one or multiple BIGs and may have no connection with broadcast LE Audio receivers which synchronize to a BIG and are also referred to as synchronized receivers. The broadcast LE audio receivers do not send acknowledgments back for every packet to the transmitter to ask for re-transmission of an audio packet (audio data) if required.

In an example use case, TV audio may be transmitted over BLE from a smart TV allowing any number of listeners with a compatible LE audio receiver. A wireless microphone device captures audio for example from a teacher in a classroom or a museum guide and sends the captured voice to hearing aids or wireless earbuds using broadcast. In another example a TV sound system may send multiple audio streams (up to 8 or more) to wireless speakers to create a surround experience. A public addressing system transmits messages of public interest such as flight schedule changes in the airport to headsets, hearables, and hearing instruments.

### SUMMARY

Aspects of the disclosure are defined in the accompanying claims. In a first aspect, there is provided a method of receiving a Bluetooth LE audio broadcast, the Bluetooth LE audio broadcast including a broadcast isochronous group (BIG) comprising a broadcast isochronous stream (BIS) and a further BIS, the BIS and the further BIS comprising a plurality of audio packets, the method comprising: receiving the BIS; processing the BIS for output to a speaker; receiving an audio packet of the BIS during a first time period; receiving an audio packet of the further BIS during a second time period; and re-transmitting the audio packet of the further BIS during a third time period. In some embodiments, the method comprises: receiving the audio packet of the further BIS at a first frequency; and re-transmitting the audio packet of the further BIS at a second frequency. In some embodiments, the method comprises: receiving a copy of the audio packet of the BIS during a fourth time period. In some embodiments, the first time period, the second time period and the third time period occur during an isochronous time interval. In some embodiments, the method comprises: receiving a transmit request from a further Bluetooth LE audio receiver; and re-transmitting the audio packet of the further BIS during the third time period in response to the request.

In a second aspect, there is provided a method of receiving a Bluetooth LE audio broadcast, the Bluetooth LE audio broadcast including a broadcast isochronous group (BIG) comprising a broadcast isochronous stream (BIS), the BIS comprising an audio packet and a duplicate audio packet the method comprising: receiving the audio packet from a Bluetooth LE audio transmitter; receiving the duplicate audio packet from a further Bluetooth LE audio receiver. In some embodiments, the audio packet and the duplicate audio packet are received at different time periods within an ISO interval. In some embodiments, the audio packet and the duplicate audio packet are received at different frequencies. In some embodiments, the method further comprises broadcasting a transmit request.

In a third aspect, there is provided a Bluetooth LE audio broadcast receiver comprising a Bluetooth LE Transceiver coupled to a processor, the Bluetooth LE (BLE) Transceiver configured to: receive a Bluetooth LE audio broadcast including a broadcast isochronous group (BIG) comprising a broadcast isochronous stream (BIS) and a further BIS, the BIS and the further BIS comprising a plurality of audio packets; output the BIS to the processor; receive an audio packet of the BIS during a first time period; receive an audio packet of the further BIS during a second time period; re-transmit the audio packet of the further BIS during a third time period; and wherein the processor is configured to process the BIS for output to a speaker. In some embodiments, the BLE transceiver is further configured to: receive the audio packet of the further BIS at a first frequency; and re-transmit the audio packet of the further BIS at a second frequency. In some embodiments, the BLE transceiver is further configured to: receive a copy of the audio packet of the first BIS during a fourth time period. In some embodiments, the first time period, the second time period and the third time period are during an isochronous time interval. In some embodiments, the BLE Transceiver is further configured to: receive a transmit request from a further Bluetooth LE audio receiver; re-transmit the audio packet of the further BIS during the third time period in response to the transmit request. A system may include a Bluetooth LE audio broadcast transmitter and a plurality of Bluetooth LE audio broadcast receivers.

In a fourth aspect, there is provided a system comprising a Bluetooth LE audio broadcast transmitter and a plurality of Bluetooth LE audio broadcast receivers, wherein the Bluetooth LE audio broadcast transmitter is configured to transmit a Bluetooth LE audio broadcast comprising a broadcast isochronous group (BIG), the BIG comprising a plurality of broadcast isochronous streams, each broadcast isochronous stream comprising a plurality of audio packets, and wherein each of the plurality of LE audio broadcast receivers are configured to receive a respective one broadcast isochronous stream (BIS) of the plurality of BISs and to decode the respective one BIS for playback; and wherein at least one of the LE audio broadcast receivers is further configured to receive a further BIS and to retransmit the further BIS, wherein an audio packet in the retransmitted further BIS is retransmitted at a different time period within an isochronous time interval than the corresponding audio packet in the received further BIS. In some embodiments, the retransmitted further BIS is a different frequency than the received further BIS. In some embodiments, the audio packet in the retransmitted further BIS is retransmitted within a same isochronous time interval as the corresponding audio packet of the received further BIS. In some embodiments, the audio packet in the retransmitted further BIS is retransmitted within a different isochronous time interval than the corresponding audio packet of the received further BIS.

### BRIEF DESCRIPTION OF THE DRAWINGS

In the figures and description like reference numerals refer to like features. Embodiments are now described in detail, by way of example only, illustrated by the accompanying drawings in which:
Figure 1 shows an example LE audio broadcast system.
Figure 2 illustrates a BIG used by the LE audio broadcast system of figure 1.

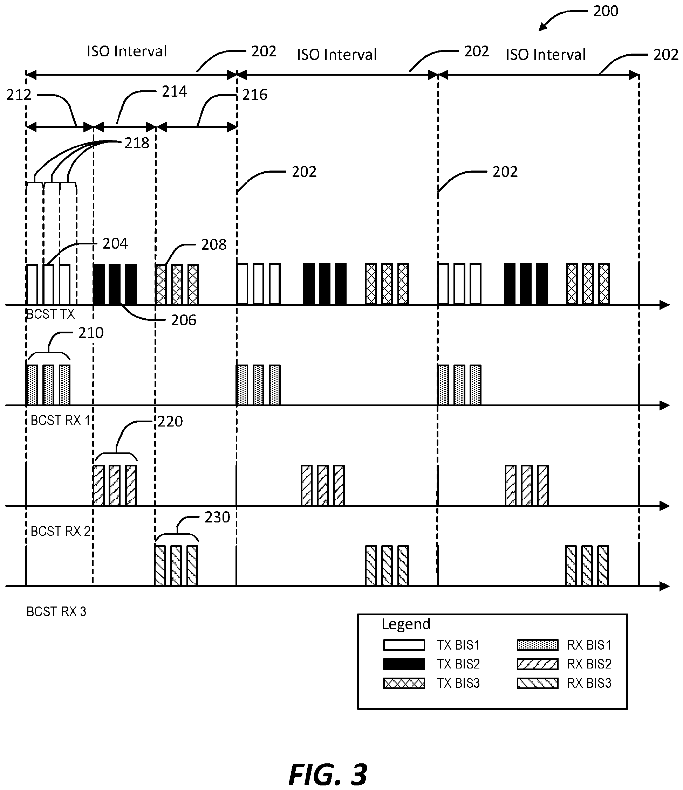

Figure 3 illustrates a timing diagram of a use case for the LE audio broadcast system of figure 1 using non-interleaved transmission.
Figure 4 Shows an LE audio broadcast system according to an embodiment.
Figure 5 Shows an LE audio broadcast receiver according to an embodiment.
Figure 6 shows a timing diagram illustrating a method of operation of the LE broadcast system of figure 4 and the LE audio broadcast receiver of figure 5.
Figure 7 illustrates a method of receiving a LE audio broadcast according to an embodiment.
Figure 8 illustrates a method of receiving a LE audio broadcast according to an embodiment.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

### DETAILED DESCRIPTION OF EMBODIMENTS

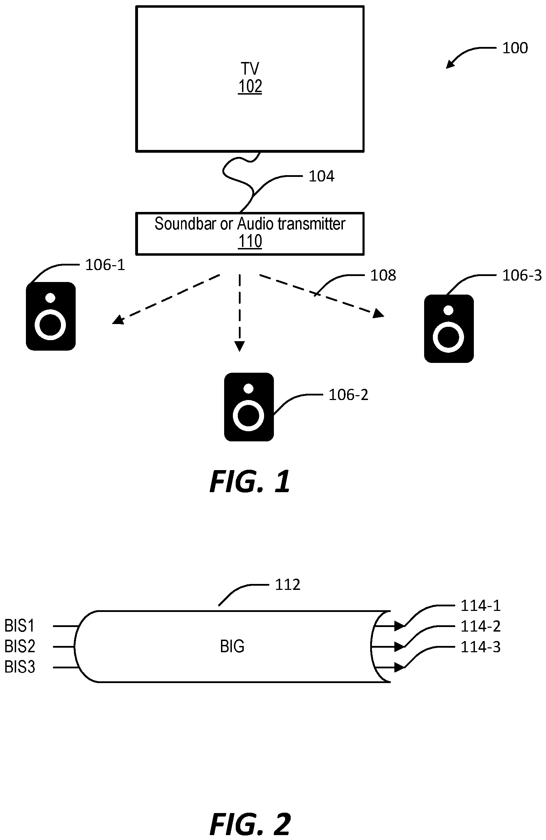

Figure 1 shows a 2.1 wireless surround system 100 including a TV 102 connected to a soundbar including a LE audio broadcast transmitter 110 with cable 104. The LE audio broadcast transmitter 110 can receive TV audio via the cable 104 and transmit LE audio broadcast 108 to a subwoofer 106-1, and two further speakers 106-2, 106-3 which are each LE audio broadcast receivers. Referring to figure 2, the audio broadcast 108 includes a BIG 112 having three audio streams 114-1, 114-2,114-3 (BIS1, BIS2, BIS3). The first BIS stream 114-1 (BIS1) may be intended for the subwoofer 106-1, the second BIS stream 114-2 (BIS2) may be intended for the first speaker 106-2 and the third BIS stream 114-3 (BIS3) may be intended for the second speaker 106-3.

In this example, it is assumed that every audio PDU ( audio packet ) is sent three times by the LE audio broadcast transmitter 110 corresponding to a retransmission number of two. The retransmission number equals total amount of transmissions minus one. A timing diagram 200 of this use case is illustrated in Figure 2 using non-interleaved time periods for the 3 BIS audio streams 114-1, 114-2, 114-3. The BIS1 audio packets 204, BIS2 audio packets 206 and BIS3 audio packets 208 are transmitted during time respective BIS events 212, 214, 216 within a defined isochronous time interval 202 which corresponds to the duration of a BIG event. Each PDU is transmitted during a time slot 218. The LE audio broadcast transmitter 110 transmits regular beacons which the LE audio broadcast receivers 106-1, 106-2, 106-3 use to synchronize to the BIG. The broadcast receiver "listens" for the intended BIS stream audio packets during the same time intervals as they are transmitted. The subwoofer 106-1 listens for audio packets 204 during time periods 210. The first speaker 106-2 listens for audio packets 206 during time periods 220. The second speaker 106-3 listens for audio packets 208 during time periods 230.

Because a broadcast transmitter does not know if an audio packet has been successfully received by all n receivers, with n ranging from 0 to infinite, it will unconditionally transmit each audio packet x times. This means that even if an audio packet has been received already by all receivers, the broadcast transmitter will still occupy airtime to transmit the audio packet multiple times. In contrast, in a Connected Isochronous Stream (CIS) in LE Audio packets are only retransmitted when needed. CIS also has the feature of Flush Timeout (FT), allowing the use of multiple time slots for retransmission over multiple CIS intervals, at the expense of audio latency. This improves the re-transmission number (number of times a packet is re-transmitted). Comparing BIS and CIS one can conclude that for the same reception robustness, BIS requires more airtime than CIS (for FT>1). Stated differently: for the same airtime, the robustness of BIS is lower than for CIS (for FT>1).

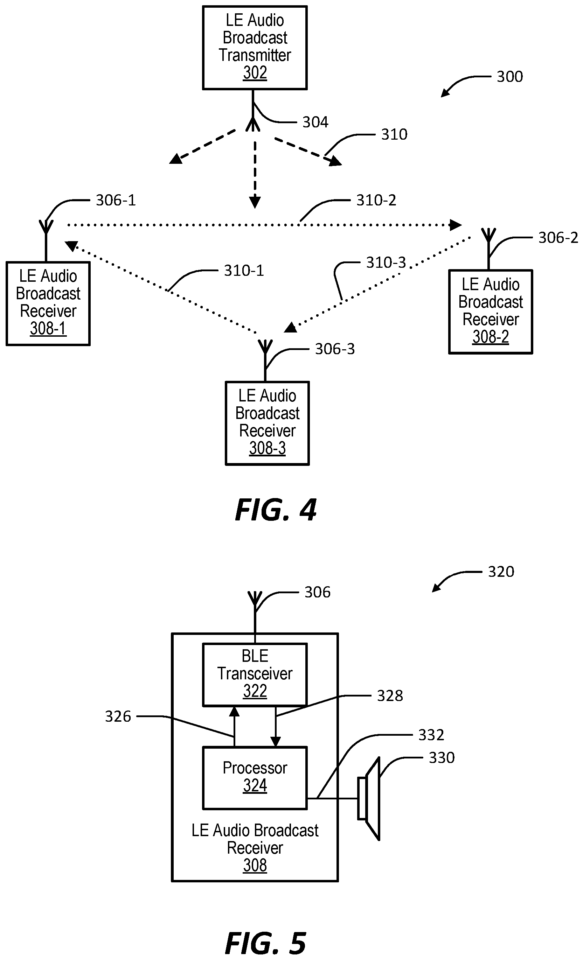

Figure 4 shows a system 300 including a including a LE audio broadcast transmitter 302 and transmit antenna 304. The LE audio broadcast transmitter 302 can transmit LE audio broadcast 310 to three LE audio broadcast receivers 308-1, 308-2, 308-3 with respective antennas 306-1, 306-2, 306-3. The audio broadcast 310 includes a BIG for example BIG 112 having three audio BIS streams 114-1, 114-2, 114-3. The first BIS stream 114-1 may be intended for the first LE audio broadcast receiver 308-1, the second BIS stream 114-2 may be intended for the second LE audio broadcast receiver 308-2, the third BIS stream 114-3 may be intended for the third LE audio broadcast receiver 308-3. In addition to listening for and decoding audio broadcast streams intended for a given receiver, one or more of the LE broadcast audio receivers 308-1, 308-2, 308-3 may listen for audio broadcasting streams intended for another receiver and retransmit audio packets for the other audio broadcasting streams. As illustrated, all three LE audio broadcast receivers 308-1, 308-2, 308-3 retransmit packets. LE audio broadcast receiver 308-1 listens to BIS1 and BIS2 and retransmits 310-2 audio packets of BIS2. LE audio broadcast receiver 308-2 listens to BIS2 and BIS3 and retransmits 310-3 audio packets for BIS3. The third LE audio broadcast receiver 308-3 listens to BIS3 and BIS1 and retransmits 310-1 audio packets for BIS 1. In other examples, different numbers of LE broadcast audio receivers may be used and the allocation of BIS streams to be re-transmitted may be different.

The airtime usage at LE broadcast transmitter 302 is relatively high compared to the LE broadcast receivers 308-1, 308-2, 308-3. The transmitter 302 needs a relatively high through-put over the radio to be able to transmit all the audio streams. The available airtime will limit the number of retransmissions for each audio packet for a given audio quality. However, the airtime required by broadcast receivers 308-1, 308-2, 308-3 is much lower because each receiver only needs to receive a single audio stream. Considering system 100 and timing diagrams 200, 250, assuming Gaussian noise and a Packet Error Rate (PER) of 10%, the probability of a receiver 106 receiving an audio packet is 1-PER³=0.999 or 1 missed audio packet on 1000 packets. The system 300 makes use of available airtime in the receivers to increase the effective retransmission number of the broadcast audio and the chance of receiver 308 to receive an audio packet is 1-(PER³(PER+(1-PER)PER²))=0.9999 or 1 missed audio packet on 10000 packets: in this example, the audio reception robustness is increased by a factor of 10. Audio reception robustness may be improved further by giving more attempts to broadcast receivers to successfully capture audio packets to be retransmitted if airtime permits.

A re-transmission by LE broadcast audio receivers 308 may overlap in time with transmission by the broadcast transmitter 302. At each moment in time, The LE broadcast audio receivers 308 know at which frequency the TX broadcaster 302 will transmit. In some examples, the broadcast receivers may use the index from selected channels by the broadcaster plus a static offset or an alternate scheme. In this way, all broadcast receivers may make the same calculation and know at which frequencies they need to retransmit or listen to. In some embodiments the broadcast receivers 308 may set up a parallel BLE network and coordinate using an ACL connection to determine which BIS stream(s), other than its own, a particular receiver listens for and retransmits. In some examples, a LE broadcast audio receiver may unconditionally listen for all BIS streams in a BIG and retransmit any BIS streams not intended for a particular LE broadcast audio receiver. In some examples a LE broadcast audio receiver may transmit a beacon packet requesting help which may be referred to herein as a transmit request. This transmit request may be received by other LE broadcast audio receivers which then start re-broadcasting received packets intended for the LE broadcast receiver that sent the transmit request. In some examples a receiver may implement a random back-off if a beacon transmit request is received and where multiple receivers are trying to help the same receivers.

Figure 5 shows an audio device 320 including LE audio broadcast receiver 308 and speaker 330. The LE audio broadcast receiver 308 includes a BLE transceiver 322 connected to an antenna 306 and a first transceiver output 328 and a first transceiver input 326 connected to a processor 324. The processor 324 may have a processor output 332 connected to a speaker 330. The BLE transceiver 322 may receive LE audio broadcast packets of a first BIS via antenna 306 and provide the first BIS audio broadcast packets to the processor 324. The processor 324 may render the first BIS audio broadcast packets for playback and output the resulting audio stream to the speaker 330.

The BLE transceiver may receive LE audio broadcast packets of a second BIS and provide the second BIS audio broadcast packets to the processor 324. The processor 324 may process the second BIS audio broadcast packets for re-transmission and output the second BIS audio broadcast packets to the BLE transceiver. The BLE transceiver 322 may transmit the second BIS audio broadcast packets via antenna 306. The second BIS audio broadcast packets may be retransmitted at a different frequency than used by the original broadcast.

The processor 324 may include an audio amplifier such as a class D audio amplifier. In other examples, the processor and the audio amplifier may be separate elements. The processor 324 and the BLE transceiver 322 may be implemented as hardware or a combination of hardware and software.

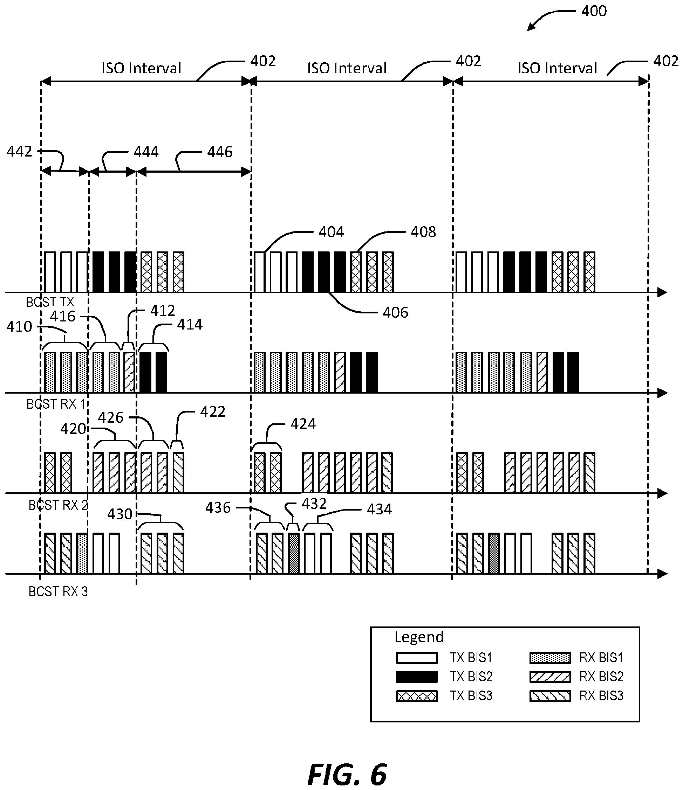

Figure 6 shows a timing diagram 400 illustrating an example mode of operation of the system 300 and the BLE broadcast receiver 320. Similarly to timing diagram 250, the BIS1 audio packets 404, BIS2 audio packets 406 and BIS3 audio packets 408 are transmitted during respective BIS1 event 442, BIS2 event 444 and BIS3 event 446 within a defined isochronous time interval 402. The LE audio broadcast transmitter 302 transmits regular beacons which the LE audio broadcast receivers 308-1, 308-2, 308-3 use to synchronize to the transmitted BIG. The broadcast receiver 308 "listens" for the intended BIS stream audio packets during the same time periods (same BIS events) as transmitted by the transmitter 302. The broadcast receiver 308 "listens" during further time periods 416,426,436 which may overlap with other BIS events i.e. time periods where other BIS streams are transmitted by the LE broadcast transmitter 302. As illustrated, the first LE audio broadcast receiver 308-1 listens for BIS1 audio packets 404 during a first time period 410 and listens for BIS2 audio packets during a second time period 412. Any BIS2 packets received may be re-transmitted during a third time period 414. The re-transmitted packets may be transmitted at a different frequency than the received BIS2 audio stream. Since the subevent timing of BIS packets is equidistant for all BIS streams in a BIG, timing slots used for transmission by LE transmitter 302 may be reused by LE broadcast receivers for retransmission on an alternate frequency. The reuse of the timing slots provides for the largest number of possible retransmissions and removes the need for negotiating timing slots for the retransmissions. Such negotiated timing may however be practical if there is additional airtime which can be used for extra transmissions and is a complimentary feature to this invention to improve robustness further.

As illustrated, received BIS1 packets are retransmitted twice but in other examples BIS audio packets may be retransmitted fewer or more times. During a fourth time period 416, the first LE broadcast audio receiver 308-1 may listen for BIS1 stream audio packets transmitted by the third LE broadcast audio receiver 308-3.

The second LE audio broadcast receiver 308-2 listens for BIS2 audio packets 406 during a first time period 420 and listens for BIS3 audio packets during a second time period 422. Any BIS3 packets received may be re-transmitted during a third time period 424. As During a fourth time period 426, the second LE broadcast audio receiver 308-1 may listen for BIS2 stream audio packets transmitted by the first LE broadcast audio receiver 308-2.

Similarly, the third LE audio broadcast receiver 308-3 listens for BIS3 audio packets 408 during a first time period 430 and listens for BIS1 audio packets during a second time period 432. Any BIS1 packets received may be re-transmitted during a third time period 434. During a fourth time period 436, the third LE broadcast audio receiver 308-3 may listen for BIS3 stream audio packets transmitted by the second LE broadcast audio receiver 308-2.

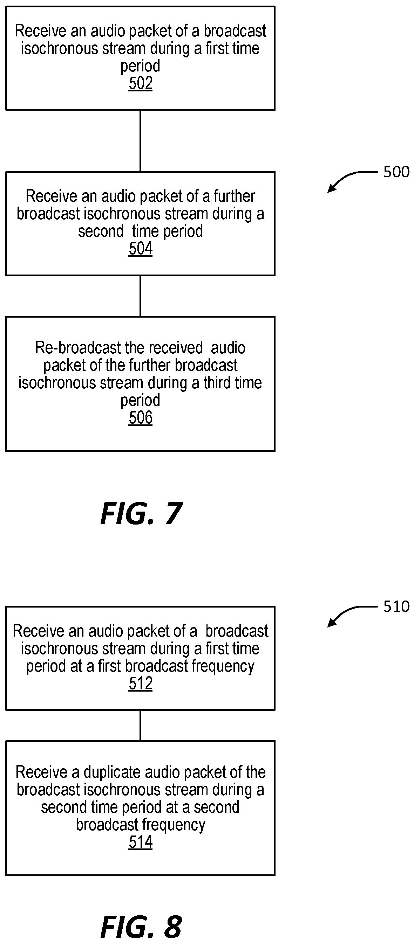

Figure 7 shows a method of operation 500 of a LE audio broadcast receiver according to an embodiment. In step 502, an audio packet of a broadcast isochronous stream is received during a first time period. In step 504, an audio packet of a further broadcast isochronous stream is received during a second time period. In step 506, the received audio packet of the further broadcast isochronous stream is re-transmitted or re-broadcast during a third time period.

Figure 8 shows a method of operation 510 of a LE audio broadcast receiver according to an embodiment. In step 512, an audio packet of a broadcast isochronous stream is received during a first time period at a first broadcast frequency. In step 514, a duplicate audio packet of the second broadcast isochronous stream is received during a second time period. The duplicate audio packet may be received at a second broadcast frequency.

Embodiments described exploit the available airtime at and LE audio (broadcast) receiver to receive data (audio packets) intended for other receivers and to repeat the data during specific timeslots from the broadcast transmitter to optimize airtime and reception. This may improve the robustness of the wireless audio broadcast. Embodiments may allow additional LE broadcast functionality invention while still allowing BLE standard operation. Embodiments of the broadcast receiver do not require any modification to the broadcast transmitter. Embodiments of a broadcast receiver may still operate as a stand-alone receiver without the need for a second compatible broadcast receiver.

A method of receiving a Bluetooth Low Energy (BLE) audio broadcast and a Bluetooth Low Energy audio broadcast receiver is described. A BLE broadcast audio receiver receives a broadcast isochronous stream (BIS) intended for play back by the receiver. The BLE broadcast audio receiver receives a further BIS intended for play back by a different BLE broadcast audio receiver. The further BIS is re-transmitted by the BLE broadcast receiver.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A method of receiving a Bluetooth LE audio broadcast, the Bluetooth LE audio broadcast including a broadcast isochronous group (BIG) comprising a broadcast isochronous stream (BIS) and a further BIS, the BIS and the further BIS comprising a plurality of audio packets, the method comprising:
receiving the BIS;
processing the BIS for output to a speaker;
receiving an audio packet of the BIS during a first time period;
receiving an audio packet of the further BIS during a second time period; and
re-transmitting the audio packet of the further BIS during a third time period.

2. The method of claim 1 further comprising:
receiving the audio packet of the further BIS at a first frequency; and
re-transmitting the audio packet of the further BIS at a second frequency.

3. The method of any preceding claim further comprising : receiving a copy of the audio packet of the BIS during a fourth time period.

4. The method of any preceding claim, wherein the first time period, the second time period and the third time period occur during an isochronous time interval.

5. The method of any preceding claim further comprising :
receiving a transmit request from a further Bluetooth LE audio receiver;
re-transmitting the audio packet of the further BIS during the third time period in response to the request.

6. A method of receiving a Bluetooth LE audio broadcast, the Bluetooth LE audio broadcast including a broadcast isochronous group (BIG) comprising a broadcast isochronous stream (BIS), the BIS comprising an audio packet and a duplicate audio packet the method comprising:
receiving the audio packet from a Bluetooth LE audio transmitter;
receiving the duplicate audio packet from a further Bluetooth LE audio receiver.

7. The method of claim 6, wherein the audio packet and the duplicate audio packet are received at different time periods within an ISO interval.

8. The method of claim 7, wherein the audio packet and the duplicate audio packet are received at different frequencies.

9. The method of any of claims 6 to 8 further comprising :
broadcasting a transmit request.

10. Bluetooth LE audio broadcast receiver comprising a Bluetooth LE Transceiver coupled to a processor;
the Bluetooth LE (BLE) Transceiver configured to:
receive a Bluetooth LE audio broadcast including a broadcast isochronous group (BIG) comprising a broadcast isochronous stream (BIS) and a further BIS, the BIS and the further BIS comprising a plurality of audio packets;
output the BIS to the processor;
receive an audio packet of the BIS during a first time period;
receive an audio packet of the further BIS during a second time period;
re-transmit the audio packet of the further BIS during a third time period;
and wherein the processor is configured to process the BIS for output to a speaker.

11. The Bluetooth LE audio broadcast receiver of claim 10 wherein the BLE transceiver is further configured to:
receive the audio packet of the further BIS at a first frequency; and
re-transmit the audio packet of the further BIS at a second frequency.

12. The Bluetooth LE audio broadcast receiver of claim 11, wherein the BLE transceiver is further configured to: receive a copy of the audio packet of the first BIS during a fourth time period.

13. The Bluetooth LE audio broadcast receiver of any of claims 10 to 12, wherein the first time period, the second time period and the third time period are during an isochronous time interval.

14. The Bluetooth LE audio broadcast receiver of any of claims 10 to 13, wherein the BLE Transceiver is further configured to:
receive a transmit request from a further Bluetooth LE audio receiver; and
re-transmit the audio packet of the further BIS during the third time period in response to the transmit request.

15. A system comprising a Bluetooth LE audio broadcast transmitter and a plurality of Bluetooth LE audio broadcast receivers according to any of claims 10 to 14.
